Europäisches Patentamt

European Patent Office

Office européen des brevets

(19)

(11) Numéro de publication : **0 021 874**
**B1**

(12) # FASCICULE DE BREVET EUROPÉEN

(45) Date de publication du fascicule du brevet :
**17.03.82**

(51) Int. Cl.³ : **F 16 J 15/32, F 01 L 3/08**

(21) Numéro de dépôt : **80400693.0**

(22) Date de dépôt : **20.05.80**

(54) **Joint d'étanchéité de passage d'une tige coulissante dans une douille de guidage.**

(30) Priorité : **27.06.79 FR 7916542**

(43) Date de publication de la demande :
**07.01.81 (Bulletin 81/01)**

(45) Mention de la délivrance du brevet :
**17.03.82 Bulletin 82/11**

(84) Etats contractants désignés :
**AT BE CH DE GB IT LI LU NL SE**

(56) Documents cités :
**FR - A - 1 261 778**
**US - A - 2 860 615**
**US - A - 2 927 808**
**US - A - 4 124 220**

(73) Titulaire : **REGIE NATIONALE DES USINES RENAULT**
**Boite postale 103 8-10 avenue Emile Zola**
**F-92109 Boulogne-Billancourt (FR)**

(72) Inventeur : **Gautier, Guy**
**7, rue des Templiers Le Tremblay Sur Mauldre**
**F-78490 Montfort L'Amaury (FR)**
Inventeur : **Bondiquet, Régis**
**26, boulevard Léon Louesse**
**F-92500 Rueil-Malmaison (FR)**

(74) Mandataire : **Ancel, Roger et al**
**R.N.U.R. S.0804 B.P. 103 8 & 10, avenue Emile Zola**
**F-92109 Boulogne Billancourt (FR)**

Imprimerie Jouve, 18, rue St-Denis, 75001 Paris, France

Joint d'étanchéité de passage d'une tige coulissante dans une douille de guidage

La présente invention se rapporte aux joints d'étanchéité de passage d'une tige coulissante dans une douille de guidage et, plus particulièrement, aux joints de petites dimensions tels que, notamment, les joints d'étanchéité entre guide et tige de soupape de moteurs à combustion interne.

Les joints d'étanchéité entre guide et tige de soupape de la technique connue sont généralement réalisés en matériau plastique et constitués de deux sections de révolution étagées coaxiales en série, l'une d'emmanchement sur l'extrémité du guide de soupape, la seconde de diamètres inférieurs de coulissement étanche pour la tige de soupape, et réunies entre elles par un simple épaulement. Ce profil, étant donné les petites dimensions du joint d'étanchéité, rend ce dernier trop rigide et ne lui permet pas d'absorber efficacement les défauts de concentricité pouvant exister entre le diamètre extérieur du guide de soupape et son alésage où se meut la tige de soupape. Ces défauts de concentricité se traduisent donc par une usure anormale de l'alésage du joint d'étanchéité assez rapidement préjudiciable à l'effet d'étanchéité recherché.

Or, il est d'usage courant d'effectuer en fabrication sur les culasses de moteurs à combustion interne, un réalésage des guides de soupape ayant pour but d'aligner leur alésage avec les portées de soupapes correspondantes sur leur siège. Il en résulte donc fréquemment de légers défauts de concentricité entre l'alésage et le diamètre extérieur des guides de soupape.

Le brevet américain n° 2 860 615 (MAYES) décrit un joint d'étanchéité en matériau élastique souple également composé de deux sections de révolution étagées coaxiales en série, dont la section de passage est constituée par une lèvre interne roulante venant directement se raccorder à la section externe d'emmanchement, de manière à résoudre ces problèmes de défaut de concentricité. Cependant, de part sa conception à lèvre roulante constamment sollicitée en déformation par le mouvement alternatif de la tige coulissante, ce joint d'étanchéité semble peu apte à résister dans le temps aux oscillations répétées à fréquence et surtout température élevées régnant dans les systèmes de distribution de moteurs à combustion interne.

Le joint d'étanchéité de passage d'une tige coulissante dans une douille de guidage, objet de la présente invention, et destiné à remédier aux inconvénients précités, en matériau plastique rigidement déformable ayant des caractéristiques élevées au frottement, et constitué de deux sections de révolution étagées coaxiales en série, dont l'une d'emmanchement sur l'extrémité de la douille de guidage, et la seconde de diamètres inférieurs de coulissement étanche pour la tige coulissante, se distingue par le fait que l'élément de liaison entre ces deux sections consiste en un prolongement tubulaire de la section d'emmanchement, se raccordant à la section de coulissement par l'intermédiaire d'une collerette radiale située à l'extrémité de la section de coulissement opposée à la section d'emmanchement, ledit prolongement tubulaire de liaison procurant une certaine souplesse d'alignement entre les deux sections précitées. Ce joint d'étanchéité assure donc, par simple déformation élastique d'une portion de révolution non portante, un rattrapage automatique sans usure anormale des défauts de concentricité entre le diamètre extérieur de la douille de guidage et la tige coulissante.

Selon une variante de réalisation, le prolongement tubulaire de liaison comporte au moins une zone de restriction d'épaisseur accroissant son élasticité en flexion et, suivant un mode de mise en œuvre préféré, le moyen de restriction d'épaisseur du prolongement tubulaire de liaison consiste en au moins une gorge externe pratiquée à la périphérie dudit prolongement de liaison.

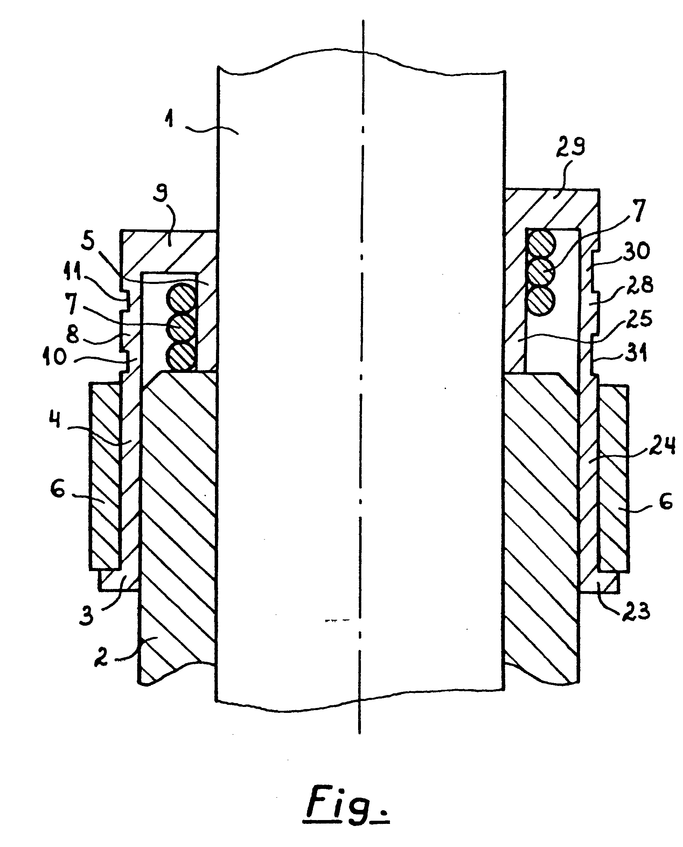

La compréhension de la présente invention sera facilitée par la description suivante d'un exemple non limitatif de réalisation préféré d'un tel joint d'étanchéité de passage d'une tige coulissante dans une douille de guidage, en référence à l'unique figure annexée, constituant une coupe longitudinale à très grande échelle d'un joint d'étanchéité entre guide et tige de soupape de moteur à combustion interne et dans laquelle, à titre de variante de réalisation, le joint d'étanchéité 23 représenté sur la partie droite possède une surface d'étanchéité plus importante que celle du joint 3, illustré par la partie gauche.

Dans l'exemple de réalisation particulière décrit ci-dessous, la tige coulissante 1 est une tige de soupape et la douille de guidage 2 un guide de soupape de moteur à combustion interne. Le joint d'étanchéité 3, 23 est, suivant l'état de la technique, en matériau plastique rigidement déformable ayant des caractéristiques élevées au frottement, tel que celui commercialisé sous la marque TEFLON, et essentiellement constitué de deux sections de révolution étagées coaxiales, en série, dont l'une 4, 24 d'emmanchement sur l'extrémité du guide de soupape 2, et la seconde 5, 25 de diamètres inférieurs de coulissement étanche pour la tige de soupape 1. Selon une technique connue en soi, la section d'emmanchement 4, 24 est maintenue sur le guide de soupape 2 par la pression d'un ressort cylindrique à lame plate 6, et la pression d'un ressort hélicoïdal 7 à spires jointives vient parfaire l'étanchéité entre la section de coulissement 5, 25 et la tige de soupape 1.

Conformément à l'objet de l'invention, l'élément de liaison entre la section d'emmanchement 4, 24 sur le guide de soupape 2 et la section de coulissement 5, 25 pour la tige de soupape 1 consiste en un prolongement tubulaire 8, 28 de la section d'emmanchement 4, 24, se raccordant à la section de coulissement 5, 25 par l'intermédiaire d'une collerette radiale 9, 29 située à l'extrémité de ladite section de coulissement 5, 25

opposée à la section d'emmanchement 4, 24. Ce prolongement tubulaire de liaison 8, 28 constituant une portion de révolution non portante du joint d'étanchéité 3, 23 procure donc, par déformation élastique étant donné la nature du matériau employé, une certaine souplesse d'alignement entre les sections d'emmanchement 4, 24 et de coulissement 5, 25.

Afin d'accroître son élasticité en flexion, le prolongement tubulaire de liaison 8, 28 comporte en outre des zones 10, 30 de restriction d'épaisseur déterminées dans le cas présent par des gorges externes 11, 31 pratiquées à sa périphérie.

Le joint d'étanchéité, objet de la présente invention, permet donc par des moyens simples donc fiables et peu onéreux, d'absorber efficacement les défauts d'excentricité pouvant exister entre le diamètre extérieur du guide de soupape et la tige de soupape elle-même.

Son domaine d'application ne se limite pas à celui du joint d'étanchéité entre guide et tige de soupape de moteur à combustion interne décrit ci-dessus, mais peut s'étendre à tout autre cas d'étanchéité de passage d'une tige coulissante dans une douille de guidage. De même, diverses modifications pourront être apportées au mode de réalisation illustré par le présent exemple sans pour autant sortir du cadre de l'invention. C'est ainsi que, notamment, le joint d'étanchéité 23 représenté sur la partie droite de l'unique figure annexée possède une section de coulissement 25 plus longue ce qui lui procure, outre une surface d'étanchéité plus importante, une plus grande longueur de prolongement tubulaire de liaison 28 se traduisant par une élasticité accrue de ce prolongement tubulaire de liaison 28 assurant encore un meilleur pouvoir d'absorption des défauts de concentricité par ce joint d'étanchéité 23.

**Revendications**

1. Joint d'étanchéité de passage d'une tige coulissante (1) dans une douille de guidage (2), en matériau plastique rigidement déformable ayant des caractéristiques élevées au frottement, et constitué de deux sections de révolution étagées coaxiales en série, dont l'une d'emmanchement sur l'extrémité de la douille de guidage (2), et la seconde de diamètres inférieurs de coulissement étanche pour la tige coulissante (1), caractérisé par le fait que l'élément de liaison entre ces deux sections consiste en un prolongement tubulaire (8, 28) de la section d'emmanchement (4, 24), se raccordant à la section de coulissement (5, 25) par l'intermédiaire d'une collerette radiale (9, 29) située à l'extrémité de la section de coulissement (5, 25) opposée à la section d'emmanchement (4, 24), ledit prolongement tubulaire de liaison (8, 28) procurant une certaine souplesse d'alignement entre les deux sections (4, 24 et 5, 25) précitées.

2. Joint d'étanchéité de passage d'une tige coulissante dans une douille de guidage, selon la revendication 1, caractérisé par le fait que le prolongement tubulaire de liaison (8, 28) comporte au moins une zone (10, 30) de restriction d'épaisseur accroissant son élasticité en flexion.

3. Joint d'étanchéité de passage d'une tige coulissante dans une douille de guidage, selon la revendication 2, caractérisé par le fait que le moyen de restriction d'épaisseur du prolongement tubulaire de liaison (8, 28) consiste en au moins une gorge externe (11, 31) pratiquée à la périphérie dudit prolongement tubulaire de liaison (8, 28).

4. Joint d'étanchéité de passage d'une liste coulissante dans une douille de guidage, selon l'une quelconque des revendications précédentes, caractérisé par le fait que la tige coulissante (1) est une tige de soupape et la bague de guidage (2) un guide de soupape de moteur à combustion interne.

**Claims**

1. A sealing arrangement for the passage of a sliding bar (1) in a guide sleeve (2), formed of rigidly deformable plastic material having good friction characteristics, and constituted by two staged sections of revolution, coaxial and in series, one of which being adapted to fit the end of the guide sleeve (2) and the second one, having a smaller diameter, being adapted to sealingly slide on the sliding bar (1), wherein the connecting element between these two sections consists of a tubular extension (8, 28) of the fitting section (4, 24) linked with the sliding section (5, 25) through a radial flange (9, 29) located at the end of the sliding section (5, 25), opposite the fitting section (4, 24), said tubular connecting extension (8, 28) providing a certain adaptability of alignment between the above sections (4, 24 and 5, 25).

2. A sealing arrangement for the passage of a sliding bar in a guide sleeve, according to claim 1, wherein the tubular connecting extension (8, 28) comprises at least one zone (10, 30) of reduced thickness to increase its bending elasticity.

3. A sealing arrangement for the passage of a sliding bar in a guide sleeve, according to claim 2, wherein the means of reducing the thickness of the tubular connecting extension (8, 28) comprises at least one external groove (11, 31) conveniently located at the peripheral part of the said tubular connecting extension (8, 28).

4. A sealing arrangement for the passage of a sliding bar in a guide sleeve, according to one of the claims 1 to 3, wherein the sliding bar (1) is a valve rod and the guide ring (2) is a valve guide of an internal combustion engine.

**Ansprüche**

1. Dichtung für den Durchgang einer Gleitstange (1) in einer Führungshülse (2) aus fest verformbarem plastischen Material mit hohe, Reibungseigenschaften, die aus zwei hintereinander angeordneten, koaxialen, gestuften Drehkörperabschnitten besteht, deren einer ein auf das Ende der Führungshülse (2) aufsteckbarer Aufsteckabschnitt ist, während der andere Abschnitt mit geringeren Durchmessern ein dicht an der Gleitstange (1) anliegender Gleitabschnitt ist, dadurch gekennzeichnet, dass der Verbindungsteil zwischen diesen beiden Abschnitten aus einer rohrförmigen Verlängerung (8, 28) des Aufsteckabschnittes (4, 24) besteht, die mit dem Gleitabschnitt (5, 25) durch einen an dem dem Aufsteckabschnitt (4, 24) entgegengestetzt liegenden Ende des Gleitabschnittes (5, 25) Radialflansch (9, 29) verbunden ist, wobei die rohrförmige Verbindungsverlängerung (8, 28) der gegenseitigen Ausrichtung der beiden genannten Abschnitte (4, 24 und 5, 25) eine gewisse Nachgiebigkeit verlaiht.

2. Dichtung für den Durchgang einer Gleitstange in einer Führungshülse nach Anspruch 1, dadurch gekennzeichnet, dass die rohrförmige Verbindungsverlängerung (8, 28) wenigstens eine verdünnte Wandstärkenstelle (10, 30) aufweist, welche ihre Biegeelastizität erhöht.

3. Dichtung für den Durchgang einer Gleitstange in einer Führungshülse nach Anspruch 2, dadurch gekennzeichnet, dass die Wandstärkenverdünnung der Verbindungsverlängerung (8, 28) durch wenigstens eine äussere, in der Umfangswandung der genannten Verbindungsverlängerung angeordnete Auskehlung (11, 31) gebildet ist.

4. Dichtung für den Durchgang einer Gleitstange in einer Führungshülse nach einem der vorstehenden Ansprüche, dadurch gekennzeichnet, dass die Gleitstange (1) ein Ventilstössel ist, während der Führungsring (2) eine Ventilführung eines Verbrennungsmotors ist.

0 021 874

*Fig.*